# EUROPÄISCHE PATENTANMELDUNG

(11) **EP 3 879 502 A1**
(43) Veröffentlichungstag der Anmeldung: **15.09.2021**
(21) Anmeldenummer: 21162370.7
(22) Anmeldetag: 12.03.2021
(51) Int. Cl.: G07B 15/06, G01C 21/00, G06Q 50/30

(54) **VERFAHREN UND SYSTEM ZUM AKTUALISIEREN VON KARTENDATEN**

(30) Priorität: 12.03.2020 EP 20000109
(71) Anmelder: Toll Collect GmbH, 10785 Berlin (DE)
(72) Erfinder: Pöhlmann, Marco, 10115 Berlin (DE); Halbfass, Stefan, 01665 Klipphausen (DE)

(57) **Zusammenfassung**

Die Offenbarung betrifft ein computerimplementiertes Verfahren zum Aktualisieren von Kartendaten eines Mautsystems, mit folgenden Schritten: Bereitstellen von aktuellen Kartendaten in einem ersten Speicherbereich eines Fahrzeuggeräts eines Fahrzeugs, Senden einer Anfrage von dem Fahrzeuggerät an eine zentrale Datenverarbeitungseinrichtung, ob neue Kartendaten verfügbar sind, wobei die neuen Kartendaten ein Gültigkeitsdatum aufweisen, wobei das Gültigkeitsdatum der neuen Kartendaten einen Zeitpunkt angibt, ab welchem die neuen Kartendaten gültig sind, falls neue Kartendaten in der zentralen Datenverarbeitungseinrichtung vorliegen, Herunterladen der neuen Kartendaten von der zentralen Datenverarbeitungseinrichtung in einen zweiten Speicherbereich des Fahrzeuggeräts, und wenn das Gültigkeitsdatum der neuen Kartendaten erreicht ist, Installieren der neuen Kartendaten in dem Fahrzeuggerät und anschließendes Verwenden der neuen Kartendaten in dem Fahrzeuggerät. Des Weiteren ist ein System offenbart.

## Beschreibung

Die Offenbarung betrifft ein Verfahren und ein System zum Aktualisieren von Kartendaten, insbesondere von Kartendaten eines Mautsystems.

### Hintergrund

Ein bekanntes Verfahren zur Erhebung von Maut basiert auf einem satellitengestützten System. Hierbei ist ein mautpflichtiges Straßennetz in mehrere Abschnitte unterteilt, wobei jedem Abschnitt ein Tarif zugeordnet ist, der die Höhe der Maut bestimmt. Die Abbildung des mautpflichtigen Straßennetzes auf die Abschnitte bildet einen Teil der Betriebsdaten des Mautsystems und ist üblicherweise in einer Zentrale gespeichert. Mit einem in einem Fahrzeug angeordneten Fahrzeuggerät wird mithilfe eines globalen Navigationssatellitensystems (GNSS - global navigation satellite system) die Position des Fahrzeugs bestimmt. Das Fahrzeuggerät sendet die Position des Fahrzeugs in regelmäßigen Abständen an die Zentrale. Wenn die Position des Fahrzeugs einem Abschnitt entspricht, das Fahrzeug also auf einer mautpflichtigen Straße fährt, wird in der Zentrale die Maut berechnet.

Bei dem satellitengestützten System sind automatische Kontrollstellen über das mautpflichtige Straßennetz verteilt, um die Mitwirkungspflicht bei der Mautentrichtung zu kontrollieren, insbesondere die ordnungsgemäße Einrichtung des Fahrzeuggeräts. Die ordnungsgemäße Einrichtung des Fahrzeuggeräts umfasst im einfachsten Fall die Frage, ob es eingeschaltet und betriebsbereit ist. Es kann darüber hinaus vorgesehen sein, dass Fahrzeugmerkmale, wie beispielsweise Länge, Gewicht und/oder Anzahl der Achsen, in dem Fahrzeuggerät gespeichert sind. In diesem Fall kann die korrekte Einstellung der Fahrzeugmerkmale von den automatischen Kontrollstellen geprüft werden.

Zusätzlich zur automatischen Kontrolle sind auch manuelle Kontrollen vorgesehen. Hierzu sind Kontrollfahrzeuge auf den mautpflichtigen Straßen unterwegs, um die Mitwirkungspflicht zu überprüfen. Bei der manuellen Kontrolle ist die Bestimmung des mautpflichtigen Abschnitts als Kontroll- und Tatort eine wesentliche Voraussetzung. Das Kontrollfahrzeug muss jederzeit (in Echtzeit) aktuelle Informationen darüber haben, welchem Abschnitt des mautpflichtigen Straßennetzes seine aktuelle Position entspricht. Tests haben gezeigt, dass eine Abfrage über das Mobilfunknetz an die Zentrale nicht ausreichend zuverlässig ist, insbesondere in Gebieten mit schlechter oder gar keiner Mobilfunknetzabdeckung.

Das Dokument AT 507 031 B1 offenbart ein Verfahren und eine Vorrichtung zum Einheben von Maut unter Verwendung von Satelliten- und/oder Mobiltelefon-Ortung. Bei dem Verfahren werden in einem Fahrzeuggerät auf der Basis von erfassten Ortsdaten und von gespeicherten Tarifdaten Gebührendaten ermittelt. Zwischen dem Fahrzeuggerät und einem zentralen System wird eine Kommunikationsverbindung aufgebaut. Vorgegebene, in Abhängigkeit von der aktuellen Fahrzeugposition jeweils benötigte Ortsdaten, z.B. in der Art von Planquadraten, werden vom zentralen System über die Kommunikationsverbindung zum Fahrzeuggerät übertragen. Dabei werden die gerade benötigten Ortsdaten laufend an das Fahrzeuggerät übertragen. Es werden jedoch immer wieder verwendete Ortsdaten bzw. Planquadrate bleibend im Fahrzeuggerät gespeichert.

Für das Aktualisieren von Verkehrsinformationen von Navigationssystemen sind ebenfalls bereits verschiedene Verfahren bekannt.

Das Dokument EP 1 283 407 A2 offenbart ein Verfahren zum Aktualisieren einer Karte auf einem Navigationsgerät. Das Navigationsgerät wird aktualisiert, indem eine neue Karte von einem Server auf das Navigationsgerät übertragen wird. Die erforderliche Datenmenge wird reduziert, indem nicht erforderliche Kartenabschnitte, beispielsweise Berge, Seen oder Kartenabschnitte, die keine Straßen aufweisen, nicht übertragen werden.

Das Dokument EP 1 870 671 A1 offenbart ein weiteres Verfahren zum Aktualisieren eines Navigationsgeräts. Es werden sequentielle Updates von einem Server auf das Navigationsgerät übertragen. Die Übertragung erfolgt priorisiert, wobei Kartenabschnitte, die näher an einem Referenzpunkt liegen, höher priorisiert sind, als Kartenabschnitte, die von dem Referenzpunkt weiter entfernt sind. Die höher priorisierten Kartenabschnitte werden zuerst übertragen.

Das Dokument DE 10 2015 000 403 B3 offenbart ein Verfahren zum Übertragen von Streckendaten an ein Kraftfahrzeug. Die Streckendaten beschreiben ein voraus liegendes Gebiet. Durch eine Steuereinrichtung des Kraftfahrzeugs werden die folgenden Schritte durchgeführt: Ermitteln eines sich zwischen einer aktuellen Position des Kraftfahrzeugs und dem Gebiet erstreckenden Streckenabschnitts, Ermitteln einer entlang des Streckenabschnitts voraussichtlich verfügbaren Übertragungsbandbreite und Ermitteln eines entlang des Streckenabschnitts voraussichtlich erreichten Geschwindigkeitsprofils der Fahrgeschwindigkeit. Hieraus ergibt sich ein Startzeitpunkt, zu welchem die Übertragung begonnen werden muss, damit die Streckendaten bei Erreichen des Gebiets vollständig übertragen sind. Es wird ein Auslöseort ermittelt, welcher gemäß dem Geschwindigkeitsprofil mit dem Startzeitpunkt korrespondiert. Erst bei Erreichen des Auslöseortes werden die Streckendaten über eine Kommunikationsverbindung bei einer stationären Servervorrichtung angefordert.

Das Dokument DE 10 2019 103 671 A1 offenbart ein Verfahren zum Aktualisieren von Karteninformationen an Bord eines Kraftfahrzeugs. Kartenkacheln werden von einem zentralen Server bereitgestellt und priorisiert an das Kraftfahrzeug übertragen.

### Zusammenfassung

Aufgabe ist, verbesserte Technologien für das Aktualisieren von Kartendaten eines Mautsystems bereitzustellen. Insbesondere soll gewährleistet sein, dass ein Fahrzeug für seine jeweilige Position gültige Kartendaten des Mautsystems vorliegen hat.

Es sind ein Verfahren nach Anspruch 1 und ein System nach Anspruch 15 offenbart. Weitere Ausführungsformen sind Gegenstand von abhängigen Ansprüchen.

Es ist ein computerimplementiertes Verfahren zum Aktualisieren von Kartendaten eines Mautsystems offenbart. Das Verfahren umfasst folgende Schritte:
- Bereitstellen (und Verwenden) von aktuellen Kartendaten in einem ersten Speicherbereich eines Fahrzeuggeräts eines Fahrzeugs,
- Senden einer Anfrage von dem Fahrzeuggerät an eine zentrale Datenverarbeitungseinrichtung, ob neue Kartendaten verfügbar sind, wobei die neuen Kartendaten ein Gültigkeitsdatum aufweisen, wobei das Gültigkeitsdatum der neuen Kartendaten einen Zeitpunkt angibt, ab welchem die neuen Kartendaten gültig sind,
- falls neue Kartendaten in der zentralen Datenverarbeitungseinrichtung vorliegen, Herunterladen der neuen Kartendaten von der zentralen Datenverarbeitungseinrichtung in einen zweiten Speicherbereich des Fahrzeuggeräts, und
- wenn das Gültigkeitsdatum der neuen Kartendaten erreicht ist, Installieren der neuen Kartendaten in dem Fahrzeuggerät und anschließendes Verwenden der neuen Kartendaten in dem Fahrzeuggerät.

Des Weiteren ist ein System zum Aktualisieren von Kartendaten eines Mautsystems bereitgestellt. Das System umfasst ein Fahrzeuggerät in einem Fahrzeug und eine zentrale Datenverarbeitungseinrichtung. Aktuelle Kartendaten sind in einem ersten Speicherbereich des Fahrzeuggeräts bereitgestellt (und werden verwendet). Das Fahrzeuggerät ist eingerichtet
- eine Anfrage an die zentrale Datenverarbeitungseinrichtung zu senden, ob neue Kartendaten verfügbar sind, wobei die neuen Kartendaten ein Gültigkeitsdatum aufweisen, wobei das Gültigkeitsdatum der neuen Kartendaten einen Zeitpunkt angibt, ab welchem die neuen Kartendaten gültig sind,
- falls neue Kartendaten in der zentralen Datenverarbeitungseinrichtung vorliegen, die neuen Kartendaten von der zentralen Datenverarbeitungseinrichtung in einen zweiten Speicherbereich herunterzuladen, und
- wenn das Gültigkeitsdatum erreicht ist, die neuen Kartendaten zu installieren und anschließend zu verwenden.

Das Fahrzeuggerät kann einen Prozessor, einen Speicher und/oder eine Kommunikationseinheit aufweisen. Ebenso kann die zentrale Datenverarbeitungseinrichtung (auch kurz als Zentrale bezeichnet) einen Prozessor, einen Speicher und/oder eine Kommunikationseinheit aufweisen. Das Fahrzeuggerät ist in dem Fahrzeug angeordnet. Die Zentrale kann stationär ausgebildet sein und beispielsweise in einem Rechenzentrum stehen. Das Fahrzeuggerät und die Zentrale können mithilfe ihrer Kommunikationseinheiten miteinander kommunizieren und/oder Daten übertragen. Der erste Speicherbereich und der zweite Speicherbereich können in einem gemeinsamen Speicher oder in separaten Speichermodulen realisiert sein.

Die für die Erfindung relevanten Daten sind Kartendaten eines Mautsystems. Ein Straßennetz kann in nicht-mautpflichtige und mautpflichtige Strecken unterteilt sein. Es kann auch vorgesehen sein, dass alle Strecken des Straßennetzes mautpflichtig sind. Bei einem satellitengestützten Mautsystem können die mautpflichtigen Strecken des Straßennetzes in einem Graphenmodell abgebildet sein. Die Kanten des Graphen bilden Abschnitte, wobei jedem Abschnitt ein Tarif zugeordnet ist, der die Höhe der Maut bestimmt. Die Kartendaten können Informationen zu mautpflichtigen Abschnitten des Mautsystems umfassen, also ob eine bestimmte Position auf einer mautpflichtigen Strecke liegt oder nicht. Ergänzend können die Kartendaten weitere Mautinformationen umfassen, beispielsweise Tarifinformationen zu den mautpflichtigen Abschnitten. Die Tarifinformationen geben an, in welcher Höhe eine Mautgebühr für einen mautpflichtigen Abschnitt zu zahlen ist.

Das Fahrzeuggerät kann eine Positionsbestimmungseinheit aufweisen oder mit einer Positionsbestimmungseinheit gekoppelt sein. Die Positionsbestimmungseinheit kann beispielsweise ein GNSS-Empfänger sein. Mit der Positionsbestimmungseinheit kann während der Fahrt die Position des Fahrzeuggeräts und damit die Position des Fahrzeugs bestimmt werden. Anhand der Position des Fahrzeugs kann mittels der Kartendaten bestimmt werden, ob es sich auf einem mautpflichtigen Abschnitt befindet.

Die Kartendaten können zeitlich veränderlich sein. Beispielsweise können Anpassungen dahingehend erfolgen, welche Strecken mautpflichtig sind und/oder wie hoch der Tarif auf bestimmten Abschnitten ist. Ergänzend können die Kartendaten Informationen zur Baustellen, Barrieren oder Streckensperrungen enthalten, die sich mit der Zeit ändern können. Daher ist es von Zeit zu Zeit erforderlich, neue Kartendaten zu erzeugen und zur Verfügung zu stellen.

Das erfindungsgemäße Verfahren ermöglicht eine rechtzeitige Bereitstellung der Kartendaten, um sicherzustellen, dass das Fahrzeug (jedes am Mautsystem teilnehmende Fahrzeug) immer mit gültigen Kartendaten unterwegs ist. Das Erreichen des Gültigkeitsdatums bedeutet, dass das aktuelle Datum dem Gültigkeitsdatum entspricht, oder dass das aktuelle Datum älter als das Gültigkeitsdatum ist, das Gültigkeitsdatum also überschritten wurde.

In einem zentralen Mautsystem bestimmen mautpflichtige Fahrzeuge während der Fahrt ihre Positionen und senden diese an die Zentrale. In der Zentrale erfolgt die Auswertung der Positionen und die Berechnung der Mautgebühr.

In einem dezentralen Mautsystem weisen die mautpflichtigen Fahrzeuge Fahrzeuggeräte auf, welche eingerichtet sind, die Position des Fahrzeugs zu bestimmen und die anhand von im Fahrzeuggerät vorgehaltenen Kartendaten die Maut zu berechnen. Die Kartendaten werden üblicherweise in der Zentrale gepflegt und aktualisiert. Wenn neue Kartendaten verfügbar sind, werden diese an die Fahrzeuggeräte der mautpflichtigen Fahrzeuge verteilt. Hierbei ist es wichtig, dass alle mautpflichtigen Fahrzeuge die jeweils gültigen Kartendaten zur Verfügung haben, da es ansonsten zu einer Ungleichbehandlung oder zur (ggf. unbeabsichtigten) Mautprellerei kommen kann.

In beiden Mautsystemen werden zur Kontrolle der Mitwirkungspflicht Kontrollfahrzeuge eingesetzt. Die Kontrollfahrzeuge bilden eine Flotte von mehreren hundert Fahrzeugen, die in einem großen Gebiet verteilt sind. Hierbei ist nicht gewährleistet, dass jedes Kontrollfahrzeug zu jeder Zeit eine ausreichende Verbindung zur Zentrale hat, um die jeweils gültigen Kartendaten während der Fahrt herunterzuladen. Für ein Kontrollfahrzeug ist es jedoch unabdinglich, die jeweils gültigen Kartendaten in dem Fahrzeuggerät vorzuhalten. Mit veralteten (nicht mehr gültigen) Kartendaten kann eine Kontrolle nicht durchgeführt werden.

Das Fahrzeug kann also ein mautpflichtiges Kraftfahrzeug oder ein Kontrollfahrzeug sein.

Die aktuellen Kartendaten stellen die derzeit aktuell gültigen Kartendaten dar; sie werden zur Veranschaulichung als Version V1 bezeichnet. Wenn neue Kartendaten (Version V2) bereitgestellt werden, haben diese ein in der Zukunft liegendes Gültigkeitsdatum. Wenn das Gültigkeitsdatum erreicht oder überschritten wird, werden die neuen Kartendaten (V2) installiert und ersetzen die bis dahin gültigen Kartendaten (V1). Die neuen Kartendaten (V2) werden damit zu den nun aktuellen, gültigen Kartendaten. Wenn später nochmals neue Kartendaten (Version V3) bereitgestellt werden, ersetzen diese dann an ihrem Gültigkeitsdatum die Kartendaten der Version V2 und so weiter.

Die Erfindung ermöglicht einen frühzeitigen Download der neuen, in der Zukunft gültigen Kartendaten. Die neuen Kartendaten können einige Zeit, z.B. eine Woche oder zwei Wochen, vordem Gültigkeitsdatum von der Zentrale zum Herunterladen bereitgestellt werden. In dieser Zeit sollte jedes Fahrzeug eine Verbindung mit der Zentrale aufnehmen können, sodass zum Gültigkeitsdatum alle Fahrzeuge mit den neuen Kartendaten versorgt sind. Die Installation der neuen Kartendaten kann dann zum Zeitpunkt des Gültigkeitsdatums erfolgen, ohne dass zu diesem Zeitpunkt eine Verbindung mit der Zentrale bestehen muss. Für diese Absicherung der Betriebsbereitschaft wird ein größerer Speicherbedarf des Fahrzeuggeräts eingepreist. Dieser Preis wird jedoch im Sinne der Betriebsbereitschaft als angemessen angesehen.

Mit dem Gültigkeitsdatum wird sichergestellt, dass die neuen Kartendaten zum richtigen Zeitpunkt installiert werden, sodass alle am Mautsystem beteiligten Fahrzeuge die jeweils gültige Version der Kartendaten vorliegen haben. Eine Installation direkt nach dem Download (wie bei der meisten Software üblich) ist hierfür nicht möglich, da schwerlich alle Fahrzeuge die neuen Kartendaten zum gleichen Zeitpunkt herunterladen können. Dies würde die Übertragungskapazität der Zentrale übersteigen. Außerdem ist nicht gewährleistet, dass alle Fahrzeuge zeitgleich eine Verbindung zur Zentrale aufbauen können (Funkloch). Mit dem frühzeitigen Bereitstellen der neuen Kartendaten in Verbindung mit dem Gültigkeitsdatum, welches den Zeitpunkt der Installation angibt, kann eine Verteilung an alle beteiligten Fahrzeuge mit großer Wahrscheinlichkeit sichergestellt werden. Die neuen Kartendaten werden installiert, wenn das Gültigkeitsdatum erreicht wird, oder wenn das Gültigkeitsdatum überschritten wurde, das aktuelle Datum also zeitlich nach dem Gültigkeitsdatum liegt. Es besteht die Möglichkeit, dass das Fahrzeuggerät beim Erreichen des Gültigkeitsdatums nicht in Betrieb ist. Wenn es nach dem Erreichen des Gültigkeitsdatums in Betrieb genommen wird, wird erkannt, dass nun die neuen Kartendaten gültig sind und die Installation der neuen Kartendaten ausgeführt. Eine Betriebsanweisung an einen Fahrer kann enthalten, dass er nach Ablauf einer bestimmten Zeit (z.B. eine Woche oder zwei Wochen), in denen durchgängig keine Verbindung zur Zentrale aufgebaut werden konnte, zunächst zwingend eine Verbindung zur Zentrale aufbaut, bevor er auf Fahrt geht, um zu prüfen, ob neue Kartendaten vorliegen.

Nach dem Herunterladen (Download) der Kartendaten von der Zentrale liegen die Kartendaten im zweiten Speicherbereich des Fahrzeuggeräts vor, sind aber noch nicht vom Prozessor verarbeitbar. Nach der Installation der Kartendaten sind diese im ersten Speicherbereich des Fahrzeuggeräts verfügbar und vom Prozessor verarbeitbar.

Das Installieren der neuen Kartendaten kann ein Löschen der aktuellen Kartendaten in dem ersten Speicherbereich und ein Kopieren der neuen Kartendaten von dem zweiten Speicherbereich in den ersten Speicherbereich umfassen. Es kann auch vorgesehen sein, dass die neuen Kartendaten in einer komprimierten Form von der Zentrale an das Fahrzeuggerät übertragen und im zweiten Speicherbereich des Fahrzeuggeräts im komprimierten Zustand gespeichert werden. Für die Installation werden die neuen Kartendaten dann entpackt und in den ersten Speicherbereich geschrieben.

Eine Uhr des Fahrzeuggeräts kann ein aktuelles Datum bereitstellen, wobei das Gültigkeitsdatum der neuen Kartendaten mit dem aktuellen Datum verglichen wird, um ein Erreichen des Gültigkeitsdatums festzustellen. Die Uhr des Fahrzeuggeräts kann mit einer Uhr der Zentrale abgeglichen werden. So kann insbesondere für eine große Flotte von Fahrzeugen sichergestellt werden, dass in jedem Fahrzeug die gleiche Zeitinformation vorhanden ist und die jeweils gültigen Kartendaten von allen Fahrzeugen rechtzeitig installiert werden.

Das Verfahren kann weiterhin vorsehen, dass nach einer Inbetriebnahme des Fahrzeuggeräts geprüft wird, ob neue Kartendaten im zweiten Speicherbereich des Fahrzeuggeräts vorliegen. Falls die Prüfung positiv ausfällt, wird das Gültigkeitsdatum der neuen Kartendaten mit dem aktuellen Datum verglichen. Die neuen Kartendaten werden in dem Fahrzeuggerät installiert und anschließend verwendet, wenn das Gültigkeitsdatum dem aktuellen Datum entspricht oder wenn das Gültigkeitsdatum überschritten wurde. Bei Fahrtantritt liegen also die gültigen Kartendaten in dem Fahrzeuggerät vor. Hierbei ist keine Anfrage an die Zentrale nötig. Es ist daher egal, wenn sich das Fahrzeug zu dieser Zeit in einem Funkloch befindet, da die nun gültigen Kartendaten bereits einige Zeit vorher heruntergeladen wurden.

Die aktuellen Kartendaten können eine erste Versionsnummer (z.B. V1) aufweisen und die neuen Kartendaten können eine zweite Versionsnummer (z.B. V2) aufweisen. Die erste Versionsnummer ist kleiner als die zweite Versionsnummer. Hiermit ist ein Vergleich der Versionsnummern möglich. Anhand der Versionsnummern können ergänzend zu dem Gültigkeitsdatum gültige Kartendaten identifiziert werden.

Es kann vorgesehen sein, dass die Kartendaten in mehrere Segmente unterteilt sind, wobei jedes Segment einem räumlichen Teilgebiet eines Mautgebiets entspricht und wobei jedes Segment Segmentdaten des Mautgebiets für das entsprechende Segment umfasst. Bei dem Verfahren kann dann vorgesehen sein, dass
- während des Betriebs des Fahrzeuggeräts Bewegungsdaten bestimmt werden, beispielsweise mittels der Positionsbestimmungseinheit,
- wenn die Bewegungsdaten anzeigen, dass ein Übergang von einem ersten Segment in ein zweites Segment zu erwarten ist, Prüfen, ob für das zweite Segment gültige Segmentdaten in dem ersten Speicherbereich vorliegen, und
- wenn für das zweite Segment keine gültigen Segmentdaten in dem ersten Speicherbereich vorliegen, Bereitstellen von gültigen Segmentdaten für das zweite Segment in dem ersten Speicherbereich.

In einem Mautsystem kann der dem Mautgebiet der mautpflichtigen Strecken entsprechende Datensatz, also die Datenmenge aller Abschnitte der mautpflichtigen Strecken, sehr groß sein. Das Mautgebiet kann daher in Segmente unterteilt sein. Jedes Segment entspricht einem räumlichen Teilgebiet des Mautgebiets und kann die Kartendaten (insbesondere die mautpflichtigen Abschnitte) für das jeweilige Teilgebiet umfassen, die Segmentdaten. Die Summe aller Segmente ergibt dann die vollständigen Kartendaten für alle mautpflichtigen Abschnitte in dem Mautgebiet. Die Anzahl der Segmente kann einstellbar sein, z. B. um die Anzahl an Systemressourcen anzupassen. In einer Ausführungsform ist der Datensatz des Mautsystems in 144 Segmente unterteilt.

Das Bereitstellen der gültigen Segmentdaten kann ein Kopieren der Segmentdaten von dem zweiten Speicherbereich des Fahrzeuggeräts in den ersten Speicherbereich des Fahrzeuggeräts umfassen. Dies stellt den Idealfall dar, dass nämlich die Segmentdaten im Vorfeld bereits heruntergeladen wurden und bei Bedarf für das entsprechende (hier zweite) Segment nur noch in dem Fahrzeuggerät installiert werden.

Das Bereitstellen der gültigen Segmentdaten kann auch ein Herunterladen der Segmentdaten von der zentralen Datenverarbeitungseinrichtung in den zweiten Speicherbereich des Fahrzeuggeräts und anschließendes Installieren der Segmentdaten im ersten Speicherbereich des Fahrzeuggeräts umfassen. Hierfür ist allerdings eine Verbindung zur Zentrale erforderlich. Falls beispielsweise diese Verbindung während einer Kontrollfahrt eines Kontrollfahrzeugs nicht zustande kommt, ist eine Kontrolle in dem zweiten Segment nicht möglich.

Es werden Kontrollfahrzeuge eingesetzt, um die Mitwirkungspflicht der Verkehrsteilnehmer am Mautsystem zu kontrollieren. Ein Kontrollfahrzeug hat üblicherweise ein begrenztes Einsatzgebiet (auch Aktionsraum genannt), das kleiner ist als das gesamte Mautgebiet. Das Einsatzgebiet kann beispielsweise einem Segment entsprechen. Es kann aber auch vorgesehen sein, dass das Einsatzgebiet mehrere zusammenhängende Segmente umfasst. Vor Beginn der Kontrollfahrt kann eine Anfrage von dem Fahrzeuggerät an die Zentrale erfolgen, ob für das Einsatzgebiet aktuelle Kartendaten (Segmentdaten) in dem Fahrzeuggerät vorliegen. Falls dies nicht der Fall sein sollte, können die Segmentdaten für das Einsatzgebiet von der Zentrale an das Fahrzeuggerät übermittelt und anschließend bei Bedarf in dem Fahrzeuggerät installiert werden.

Wenn das Kontrollfahrzeug während der Kontrollfahrt an die Grenze des Einsatzgebiets kommt und abzusehen ist, dass es das Einsatzgebiet verlassen und in ein nicht zum Einsatzgebiet gehörendes Segment (zweites Segment) fahren wird, kann geprüft werden, ob für das zweite Segment gültige Kartendaten vorliegen. Falls nicht, können die Kartendaten für das zweite Segment von der Zentrale an das Fahrzeuggerät übertragen und dort installiert werden.

Die Kartendaten des Mautsystems können also räumlich segmentiert werden. Bei der räumlichen Segmentierung werden die Daten (für das gesamte Mautgebiet) den Segmenten (für einzelne Teilgebiete) zugeordnet. Die räumliche Segmentierung kann folgende Aspekte unterstützen und/oder ermöglichen:
a) eine Reduzierung des zu übertragenen Datenvolumens,
b) eine Priorisierung von Updates und/oder
c) eine Optimierung des Updateprozesses.

Die Zentrale kann für ein Segment oder für mehrere Segmente Updatepakete für die jeweiligen Segmentdaten als Vollupdate oder als differenzielles Update (Delta-Update) bereitstellen. Ein Vollupdate beinhaltet alle aktuellen oder zukünftig gültigen Kartendaten eines Segments. Ein Vollupdate ersetzt den kompletten Datenbestand eines Segments. Ein differenzielles Update enthält nur gelöschte, editierte oder neu eingefügte Kartendaten eines Segments. Ein differenzielles Update kann von dem Fahrzeuggerät mit der zuletzt geladenen Datenversion angefordert werden. Die Zentrale soll somit in der Lage sein, auf Anforderung des Fahrzeuggeräts ein differenzielles Update als Delta-Patch auszuliefern, das alle Änderungen seit der zuletzt von der Fahrzeuggerät geladenen Datenversion enthält. Analog können auch die neuen Kartendaten (nicht segmentiert) als vollständiges Update oder als Delta-Update bereitgestellt werden.

In einer Ausführungsform kann das Prüfen der Gültigkeit der Segmentdaten für das zweite Segment eine Abfrage einer Versionsinformation zu den Segmentdaten umfassen, wobei nach Erhalt der Versionsinformation geprüft wird, ob gültige Segmentdaten für das zweite Segment vorhanden sind.

Es kann vorgesehen sein, dass die Segmente direkt aneinandergrenzen, derart, dass die Segmente das Mautgebiet lückenlos und überlappungsfrei abdecken. Die Segmente können eine viereckige Form aufweisen. Die Form kann beispielsweise rechteckig oder quadratisch sein. Auch andere Formen sind denkbar, beispielsweise andere Polygone, wie z. B. regelmäßige Sechsecke.

Jedes Segment kann eine das jeweilige Segment kennzeichnende Segmentidentifikationsnummer (Segment-ID) aufweisen. Die Segment-ID ermöglicht ein einfaches Zuordnen der Segmentdaten zu den Segmenten.

Die Bewegungsdaten können eine Position, eine Geschwindigkeit und/oder eine Bewegungsrichtung des Fahrzeugs umfassen. Die Bewegungsdaten können beispielsweise satellitengestützt bestimmt werden, z.B. mit Hilfe der Positionsbestimmungseinheit. Alternativ oder ergänzend können Bewegungsdaten von Komponenten des Fahrzeugs, z. B. von einem Tachometer oder einem Gyro-Sensor, für das Fahrzeuggerät bereitgestellt werden.

In einer Ausführungsform kann vorgesehen sein, dass für an das zweite Segment angrenzende Segmente (dritte Segmente) geprüft wird, ob gültige Segmentdaten für die jeweiligen dritten Segmente vorliegen. Falls gültige Segmentdaten für die dritten Segmente nicht vorliegen sollten, werden diese bereitgestellt. Die Bereitstellung kann wiederum ein Herunterladen der Segmentdaten von der Zentrale und/oder ein Installieren der Segmentdaten in dem Fahrzeuggerät umfassen, wie dies bereits für die Segmentdaten des zweiten Segments beschrieben ist (die Ausführungen gelten analog).

In analoger Weise kann eine Prüfung und ggf. Bereitstellung von Segmentdaten für an die dritten Segmente angrenzende Segmente (vierte Segmente) erfolgen und so weiter.

Die Bereitstellung der Segmentdaten für die verschiedenen Segmente kann prioritätsbasiert erfolgen. Die Priorisierung kann abhängig vom Ort des Fahrzeugs, seiner Geschwindigkeit und/oder seiner Richtung erfolgen. Ziel ist es, die Segmentdaten für das am nächsten zu befahrende Segment mit höchster Priorität von der Zentrale bereitzustellen, falls diese nicht zuvor bereits heruntergeladen wurden. Es kann auch vorgesehen sein, dass der Abstand der Segmente zum ersten Segment die Priorität bestimmt. Segmentdaten für Segmente, die näher am ersten Segment liegen, werden mit einer höheren Priorität bereitgestellt als Segmentdaten für Segmente, die von dem ersten Segment weiter entfernt sind. Die Segmentdaten für das zweite Segment haben also eine höhere Priorität als Segmentdaten für dritte Segmente und die Segmentdaten für die dritten Segmente haben eine höhere Priorität als Segmentdaten für die vierten Segmente. Die Priorisierung hat Einfluss auf das Herunterladen der Segmentdaten von der Zentrale. Segmentdaten mit hoher Priorität werden vor Segmentdaten mit niedriger Priorität heruntergeladen.

Die datentechnische Verbindung zwischen der Zentrale und dem Fahrzeuggerät kann verschlüsselt sein, beispielsweise mittels https oder ssh (https - Hypertext Transfer Protocol Secure, ssh - secure shell).

Merkmale, die im Zusammenhang mit dem Verfahren offenbart sind, können in analoger Weise auf das System angewendet werden und anders herum.

### Beschreibung von Ausführunqsbeispielen

Im Folgenden werden beispielhafte Ausführungsformen unter Bezugnahme auf Figuren näher erläutert. Es zeigen:
- Fig. 1 - 6: verschiedene schematische Darstellungen eines segmentierten Gebiets,
- Fig. 7: eine schematische Darstellung eines Systems,
- Fig. 8: ein Ablaufdiagramm für ein erstes Verfahren zum Aktualisieren von Kartendaten eines Mautsystems,
- Fig. 9: ein Ablaufdiagramm für ein zweites Verfahren zum Aktualisieren von Kartendaten eines Mautsystems und
- Fig. 10: ein Ablaufdiagramm für ein drittes Verfahren zum Aktualisieren von Kartendaten eines Mautsystems.

Im Folgenden werden für gleiche Komponenten/Verfahrensschritte gleiche Bezugszeichen verwendet.

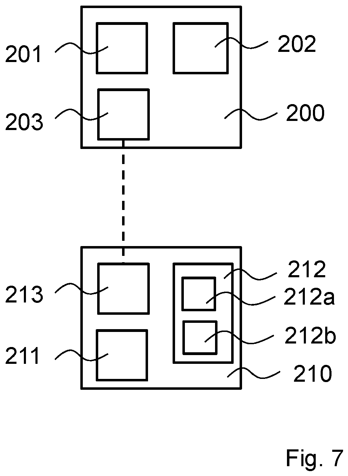

Das System ist schematisch in Fig. 7 gezeigt. Es umfasst eine zentrale Datenverarbeitungseinrichtung (kurz Zentrale genannt) 200 mit einem Prozessor 201, einem Speicher 202 und einer Kommunikationseinheit 203. Das System weist des Weiteren ein Fahrzeuggerät 210 auf, das in einem Fahrzeug 3 angeordnet ist. Das Fahrzeuggerät 210 weist einen Prozessor 211, einen Speicher 212 und eine Kommunikationseinheit 213 auf. Der Speicher 212 des Fahrzeuggeräts 210 umfasst einen ersten Speicherbereich 212a und einen zweiten Speicherbereich 212b. Das Fahrzeuggerät 210 kann des Weiteren einen GNSS-Empfänger aufweisen (nicht dargestellt). Die Kommunikationseinheit 203 der Zentrale 200 und die Kommunikationseinheit 213 des Fahrzeuggeräts 210 sind konfiguriert, über ein Mobilfunknetz (z.B. 2G, 3G, 4G oder 5G) Daten miteinander auszutauschen. Insbesondere kann die Kommunikationseinheit 203 der Zentrale 200 Versionsinformationen zu Kartendaten eines Mautsystems sowie neue Kartendaten an die Kommunikationseinheit 213 des Fahrzeuggeräts 210 übertragen.

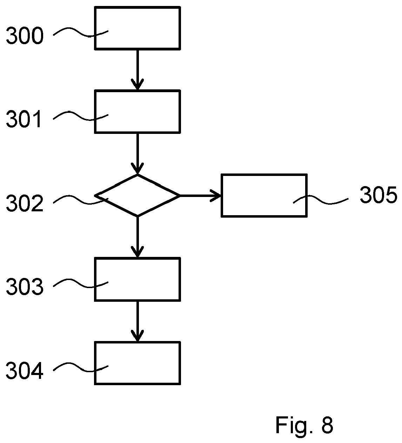

Eine erste Ausführungsform eines Verfahrens zum Aktualisieren von Kartendaten eines Mautsystems ist in Fig. 8 gezeigt. Es werden aktuelle, derzeit gültige Kartendaten (Version V1) im ersten Speicherbereich 212a des Fahrzeuggeräts 210 bereitgestellt (Schritt 300). Diese aktuellen Kartendaten (V1) werden während des Betriebs des Fahrzeugs verwendet. Das Fahrzeuggerät 210 sendet mittels seiner Kommunikationseinheit 213 eine Anfrage an die Zentrale 200, ob neue Kartendaten (Version V2) verfügbar sind (Schritt 301). Die neuen Kartendaten (V2) sind erst in der Zukunft gültig und weisen ein Gültigkeitsdatum auf, das angibt, ab welchem Zeitpunkt die neuen Kartendaten verwendet werden sollen. In der Zentrale 200 wird geprüft, ob neue Kartendaten (V2) vorliegen (Schritt 302). Wenn neue Kartendaten (V2) vorliegen, werden diese von dem Fahrzeuggerät 210 heruntergeladen und in einem zweiten Speicherbereich 212b abgelegt (Schritt 303). Wenn das Gültigkeitsdatum der neuen Kartendaten (V2) erreicht wird, werden die neuen Kartendaten (V2) im ersten Speicherbereich 212a des Fahrzeuggeräts 210 installiert und anschließend verwendet (Schritt 304). Sie ersetzen dann die bis dahin aktuellen Kartendaten (V1). Falls keine neuen Kartendaten (V2) in der Zentrale 200 vorliegen oder falls die in der Zentrale 200 vorliegenden neuen Kartendaten (V2) bereits zuvor von dem Fahrzeuggerät 210 heruntergeladen wurden, endet das Verfahren (Schritt 305).

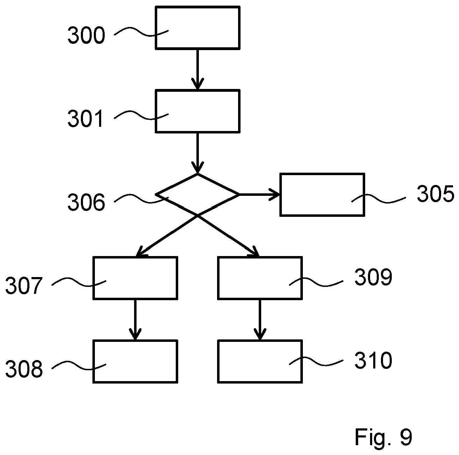

Eine zweite Ausführungsform eines Verfahrens zum Aktualisieren von Kartendaten eines Mautsystems ist in Fig. 9 dargestellt. Die Schritte 300, 301 und 305 entsprechen den Schritten wie in Fig. 8. In der Zentrale 200 wird geprüft, ob neue Kartendaten vorliegen und in welcher Form sie vorliegen (Schritt 306). Die neuen Kartendaten können als vollständiges Update (Full-Update) oder als inkrementelles Update (Delta-Update) bereitgestellt werden. Ein vollständiges Update enthält die vollständigen Kartendaten in der zukünftig gültigen Form. Es ersetzt die vorhandenen (aktuellen) Kartendaten (V1). Das Delta-Update enthält nur die Änderungen der neuen Kartendaten (V2) gegenüber den aktuellen Kartendaten (V1). Mit dem Delta-Update werden die vorhandenen aktuellen Kartendaten (V1) ergänzt und damit auf den zukünftig gültigen Stand (V2) gebracht. Wenn ein vollständiges Update vorliegt, wird es auf das Fahrzeuggerät 210 heruntergeladen und im zweiten Speicherbereich 212b abgelegt (Schritt 307). Wenn das Gültigkeitsdatum der neuen Kartendaten im vollständigen Update erreicht wird, wird das Full-Update (V2) im ersten Speicherbereich 212a installiert und ersetzt die bis dahin aktuellen Kartendaten (V1) (Schritt 308). Falls ein Delta-Update vorliegt, wird es auf das Fahrzeuggerät 210 heruntergeladen und im zweiten Speicherbereich 212b abgelegt (Schritt 309). Wenn das Gültigkeitsdatum erreicht wird, werden die bis dahin aktuellen Kartendaten (V1) im ersten Speicherbereich 212a aktualisiert und damit auf den gültigen Stand (V2) gebracht (Schritt 310).

Ein Verkehrsraum (beispielsweise eine Region, eine Stadt oder ein Land) umfasst ein Straßennetz, wobei das Straßennetz das Gesamtgefüge von einzelnen Straßen ist (z. B. Bundesautobahnen, Bundesstraßen, Landesstraßen, Kreisstraßen und/oder Gemeindestraßen).

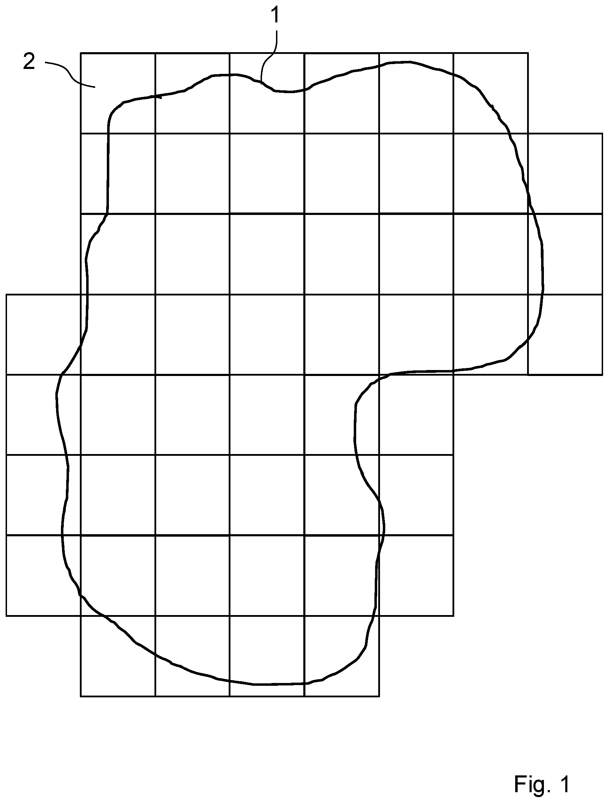

Der Verkehrsraum ist einem Gebiet 1 zugeordnet, dass in Fig. 1 schematisch dargestellt ist. Das Gebiet 1 umfasst Kartendaten eines Mautsystems. Wie bereits zuvor ausgeführt, ist das Straßennetz zum Bilden der Kartendaten in Abschnitte unterteilt. Mit den Kartendaten kann anhand der Position geprüft werden, ob sich ein Fahrzeug auf einem mautpflichtigen Abschnitt befindet oder nicht. Das Gebiet 1 umfasst optional Informationen zu Mauttarifen, Barrieren in dem Straßennetz, beispielsweise zu Baustellen und/oder temporären Streckensperrungen. Die einzelnen Abschnitte und Barrieren sind in Fig. 1 - 6 der besseren Übersicht halber nicht im Einzelnen dargestellt.

Das Gebiet 1 ist in mehrere Segmente 2 unterteilt. Die hier gezeigten Segmente sind rechteckig. Sie könnten aber auch eine beliebige andere Form aufweisen, beispielsweise quadratisch oder sechseckig.

Jedes Segment 2 entspricht einem Teilgebiet des Gebiets 1 und enthält die Daten zu diesem Teilgebiet, also die Kartendaten inklusive der mautpflichtigen Abschnitte. Dies sind die Segmentdaten. Die Summe aller Segmente 2 bildet den vollständigen Datensatz der Kartendaten für das Gebiet 1, sodass in dem Verkehrsraum Maut erhoben werden kann.

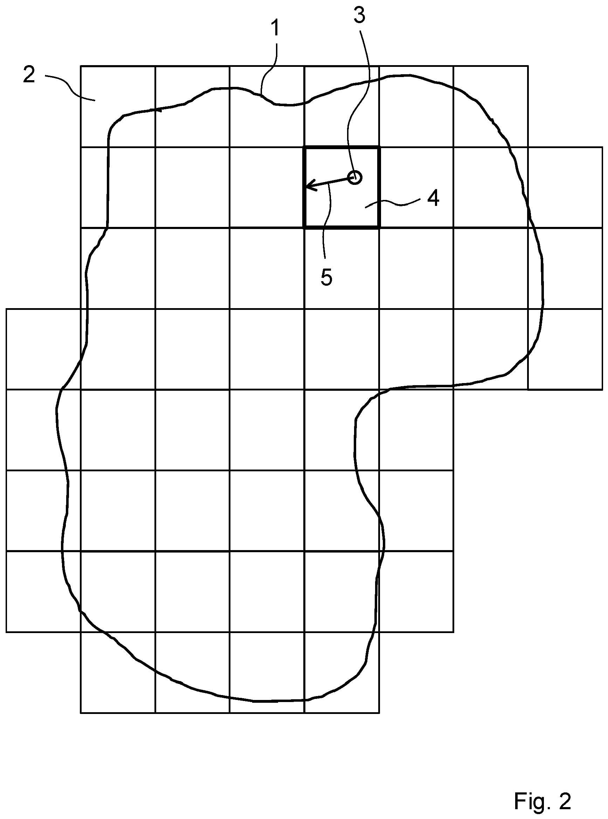

Fig. 2 zeigt die Position des Fahrzeugs 3 in dem Gebiet 1. Im vorliegenden Beispiel handelt es sich bei dem Fahrzeug 3 um ein Kontrollfahrzeug, das eingesetzt wird, um die Mitwirkungspflicht am Mautsystem zu kontrollieren. Die Ausführungen gelten jedoch für mautpflichtige Fahrzeuge analog. Das Fahrzeug 3 befindet sich in seinem Aktionsraum 4, der in dem hier gezeigten Beispiel genau einem Segment entspricht. Das Fahrzeug 3 weist das Fahrzeuggerät 210 auf. Im ersten Speicherbereich 212a sind zumindest die aktuellen Kartendaten zu dem Aktionsraum 4 gespeichert. Es wird ein Bewegungsvektor 5 des Fahrzeugs 3 bestimmt, beispielsweise mithilfe eines GNSS-Empfängers. Der Bewegungsvektor 5 kann die Geschwindigkeit des Fahrzeugs 3 und/oder die Fahrtrichtung des Fahrzeugs 3 umfassen.

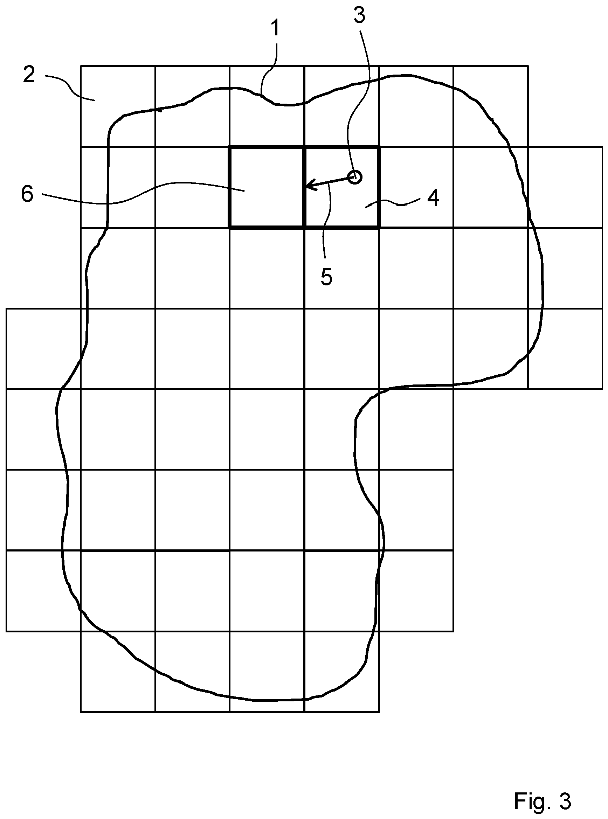

Wenn festgestellt wird, dass sich das Fahrzeug 3 der Grenze des Aktionsraums 4 nähert, werden die erforderlichen Kartendaten für das angrenzende Segment 6 bereitgestellt, so dass die erforderlichen Daten vorliegen, bevor das Fahrzeug 3 in das angrenzende Segment 6 fährt (Fig. 3).

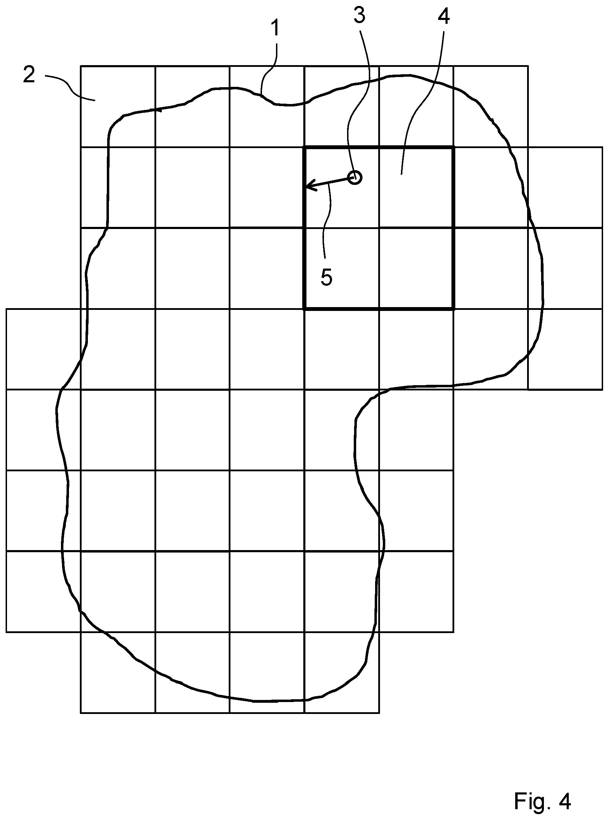

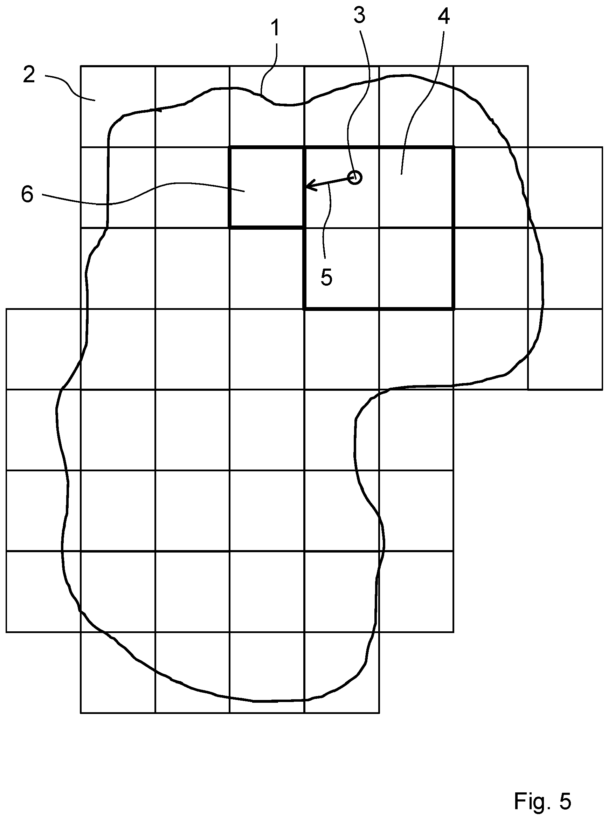

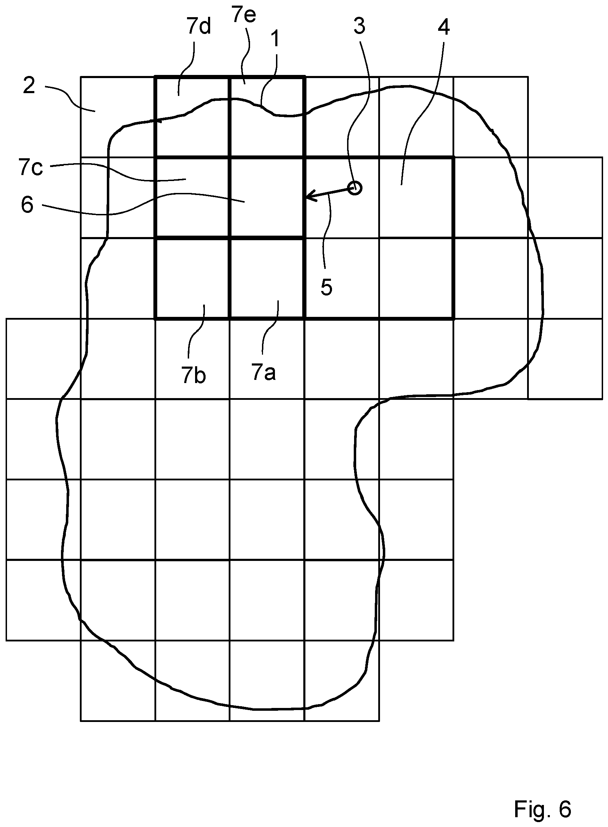

Es kann auch vorgesehen sein, dass der Aktionsraum 4 des Fahrzeugs 3 mehrere Segmente umfasst, wie beispielsweise in Fig. 4 dargestellt ist. Hier umfasst der Aktionsraums 4 vier Segmente. Wenn anhand des Bewegungsvektors 5 festgestellt wird, dass sich das Fahrzeug 3 einer Grenze des Aktionsraums 4 nähert, werden die Kartendaten zu dem angrenzenden Segment 6 mit einer ersten (hohen) Priorität bereitgestellt. Kartendaten zu Segmenten, die zu dem angrenzenden Segment 6 benachbart sind (Nächste-Nachbar-Segmente 7a, ..., 7e) werden mit einer zweiten (niedrigen) Priorität bereitgestellt (vgl. Fig. 5 und 6). Wenn die Kartendaten zum angrenzenden Segment 6 und zu den Nächste-Nachbar-Segmenten 7a, ... 7e zur Bereitstellung von der Zentrale heruntergeladen werden, erfolgt der Download entsprechend der Priorität. Es werden also zuerst die Kartendaten für das angrenzende Segment 6 und danach die Kartendaten für die Nächste-Nachbar-Segmente 7a, ..., 7e von der Zentrale 200 an das Fahrzeuggerät 210 übertragen.

Sollte sich das Fahrzeug 3 im Rahmen seiner Kontrolltätigkeit in die Richtung der Grenze des eigenen Aktionsraums 4 bewegen, dann muss sichergestellt werden, dass gültige Kartendaten in dem Fahrzeuggerät 210 vorliegen. Deshalb wird während der Kontrollfahrt geprüft, ob in dem Fahrzeuggerät 210 für das angrenzende Segment 6 gültige Kartendaten vorliegen. Wurden diese bereits im normalen Regelprozess nach dem Betriebsstart des Fahrzeuggeräts 210 von der Zentrale 200 heruntergeladen, dann erfolgt nur noch deren Installation in dem Fahrzeuggerät 210 (in abhängig vom Gültigkeitsdatum). Liegen diese jedoch nicht in dem Fahrzeuggerät 210 vor, werden diese von der Zentrale 200 auf das Fahrzeuggerät 210 heruntergeladen und anschließend auf dem Fahrzeuggerät 210 installiert.

Der Aktionsraum 4 definiert den wahrscheinlichen Aufenthaltsraum des Fahrzeugs 3. Er kann sich aus dem Segment des aktuellen Fahrzeugs-Standortes zuzüglich der Segmente in einem konfigurierbaren Umkreis (z. B. Radius 100 km) zusammensetzen. Für die im Aktionsraum befindlichen Segmente bezieht das Fahrzeuggerät 210 des Fahrzeugs 3 prioritär Updates für die erforderlichen Kartendaten. Der Aktionsraum 4 sollte hinreichend groß eingestellt werden, so dass das Nachladen von Kartendaten für angrenzende Segmente mit neuen Kartendaten während der Fahrt eine Ausnahme bildet.

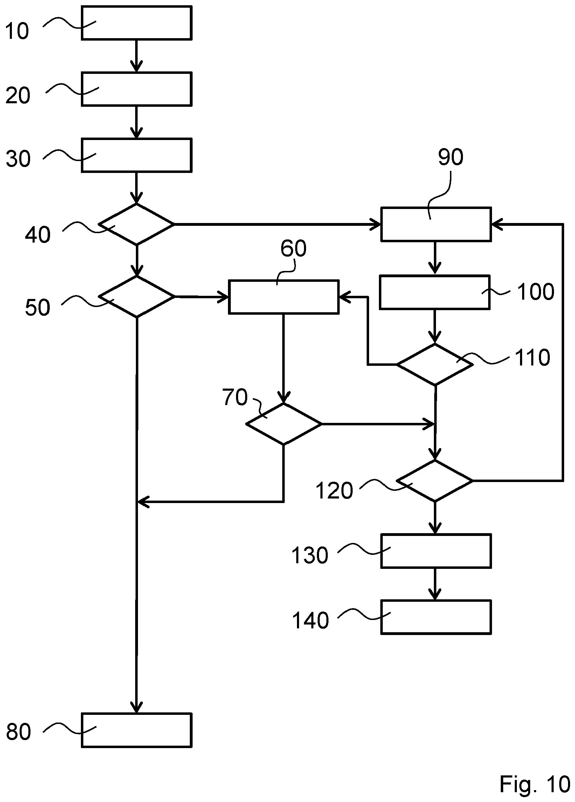

Eine weitere Ausführungsform für das Aktualisieren der Kartendaten während der Fahrt ist im Folgenden mit Bezug zu Fig. 10 beschrieben.

Eine Prüfung und Aktualisierung der Kartendaten wird ausgelöst durch die Annäherung des Fahrzeugs 3 mit dem Fahrzeuggerät 210 an die Grenze des aktuell gültigen Aktionsraums 4 (Schritt 10). Der Prozessor 211 des Fahrzeuggeräts 210 sendet eine Anfrage an die Zentrale 200 nach der aktuellen Versionsnummer der Kartendaten für das zu befahrende angrenzende Segment 6 (Schritt 20). Die Versionsinformation der Kartendaten zu dem angrenzenden Segment 6 wird von der Zentrale 200 bereitgestellt und an die Fahrzeuggerät 210 übermittelt (Schritt 30).

Es wird geprüft, ob die im Speicher 212 des Fahrzeuggeräts 210 vorliegenden Kartendaten für das zu befahrende Segment 6 der aktuellen Version entsprechen (Schritt 40). Hierfür wird neben der Versionsnummer auch das Gültigkeitsdatum geprüft. Wenn dies der Fall ist, wird geprüft, ob die aktuellen Kartendaten bereits installiert sind, also prozessbereit im ersten Speicherbereich 212a vorliegen (Schritt 50). Falls dies auch zutreffend ist, ist das Fahrzeuggerät 210 für das zu befahrende Segment 6 bereit und das Verfahren endet (Schritt 80). Die Prüfungen werden durch den Prozessor 211 des Fahrzeuggeräts 210 durchgeführt.

Wenn im Schritt 50 festgestellt wird, dass die erforderlichen Kartendaten zwar im zweiten Speicherbereich 212b vorliegen, aber noch nicht installiert sind, wird die Installation durchgeführt (Schritt 60). Falls die Installation der Kartendaten für das zu befahrende Segment 6 erfolgreich ist (Schritt 70), ist das Verfahren wiederum erfolgreich beendet (Schritt 80).

Wenn im Schritt 40 festgestellt wird, dass die erforderlichen Kartendaten in dem Fahrzeuggerät 210 nicht vorliegen, werden diese von der Zentrale 200 bereitgestellt (Schritt 90). Die erforderlichen Kartendaten werden im Schritt 100 von der Zentrale 200 an das Fahrzeuggerät 210 übertragen. Wenn die Übertragung der erforderlichen Kartendaten erfolgreich ist, was in Schritt 110 geprüft wird, werden die Kartendaten anschließend installiert (Schritt 60). Anschließend erfolgt die Prüfung, ob die Installation erfolgreich verlaufen ist (Schritt 70). Wenn die Installation erfolgreich war, ist das Verfahren beendet und das Fahrzeuggerät 210 ist für das angrenzende Segment 6 betriebsbereit (Schritt 80). Wenn die Installation der erforderlichen Kartendaten nicht erfolgreich war, erfolgt ein Wiederholungsversuch (Schritt 120). Es kann auch vorgesehen sein, einen zweiten Wiederholungsversuch durchzuführen, falls beim (ersten) Wiederholungsversuch die Bereitstellung der aktuellen Kartendaten nochmals fehlschlägt.

Falls das Herunterladen der erforderlichen Kartendaten nicht erfolgreich war, beispielsweise wegen Verbindungsproblemen oder wegen technischer Probleme in der Zentrale 200, wird ebenfalls ein Wiederholungsversuch durchgeführt (Schritt 120). Auch hierbei kann auch vorgesehen sein, einen zweiten Wiederholungsversuch durchzuführen, falls beim (ersten) Wiederholungsversuch die Übertragung der erforderlichen Kartendaten nochmals fehlschlägt.

Wenn nach dem Wiederholungsversuch oder ggf. nach dem zweiten Wiederholungsversuch die Übertragung oder Installation immer noch nicht erfolgreich war, wird festgestellt, dass das Fahrzeuggerät 210 für das zu befahrende Segment 6 nicht betriebsbereit ist, weil keine aktuellen Kartendaten vorliegen (Schritt 130). Es sind daher weitere Schritte erforderlich (Schritt 140). Die weiteren Schritte können beispielsweise das Durchführen einer Kontrolle im aktuellen Aktionsraum 4, eine Fernwartung des Fahrzeuggeräts 210, ein Neustart des Fahrzeuggeräts 210 oder eine Fahrt zu einem Servicestützpunkt sein; sind jedoch im Detail nicht Gegenstand der Anmeldung.

Im normalen Regelbetrieb erfolgt beim Systemstart des Fahrzeuggeräts 210 eine Anfrage bei der Zentrale 200 zur Vorlage von neuen Kartendaten für die Segmente im Aktionsraum. Liegen hier aktualisierte Kartendaten vor, so sollen diese vor dem Start der Kontrollfahrt heruntergeladen und ggf. installiert werden. Erst dann ist das Fahrzeug einsatzbereit. Anschließend werden während der Fahrt die Daten für die Segmente im restlichen Gebiet geprüft und die Daten gegebenenfalls geladen. Es erfolgt eine Priorisierung der Segmente für den Download entsprechend der Position des Fahrzeugs. Räumlich nahe Segmente werden zuerst geladen. Während der Fahrt wird zudem permanent geprüft, ob in dem Fahrzeuggerät für die Segmente im sich mit der Fahrzeugposition verschiebenden Aktionsraum erforderlichen Kartendaten vorliegen. Grundsätzlich sollen die erforderlichen Kartendaten vor Erreichen ihres Gültigkeitsdatums im normalen Kontrollbetrieb geladen werden, damit diese bei dem Systemstart oder bei Annäherung an ein Segment außerhalb des Aktionsraums lediglich noch installiert werden müssen.

In einem Servicefall erfolgt die Erstinstallation der Kartendaten für den aktuellen Aktionsraum des Fahrzeugs. Damit ist das Fahrzeug einsatzbereit. Anschließend werden die restlichen Daten während des Betriebs für das gesamte Gebiet geladen, wobei Daten für an den Aktionsraum angrenzende Segmente zuerst abgerufen werden. Dabei erfolgt die Versorgung direkt von der Zentrale.

Sollte eine Fahrzeuggerät einen längeren Zeitraum (z.B. länger als eine Woche oder länger als zwei Wochen) nicht in Betrieb sein und damit keine Verbindung zu der Zentrale gehabt haben, so sollen vor Kontrollbeginn oder Fahrtantritt, wie oben beschrieben, alle für den Aktionsraum gültigen Kartendaten heruntergeladen und installiert werden.

Die in der Beschreibung, den Ansprüchen und den Figuren offenbarten Merkmale können für die Verwirklichung von Ausführungsformen sowohl einzeln als auch in beliebiger Kombination miteinander relevant sein.

## Patentansprüche

1. Computerimplementiertes Verfahren zum Aktualisieren von Kartendaten eines Mautsystems, mit folgenden Schritten:
- Bereitstellen von aktuellen Kartendaten in einem ersten Speicherbereich eines Fahrzeuggeräts eines Fahrzeugs,
- Senden einer Anfrage von dem Fahrzeuggerät an eine zentrale Datenverarbeitungseinrichtung, ob neue Kartendaten verfügbar sind, wobei die neuen Kartendaten ein Gültigkeitsdatum aufweisen, wobei das Gültigkeitsdatum der neuen Kartendaten einen Zeitpunkt angibt, ab welchem die neuen Kartendaten gültig sind,
- falls neue Kartendaten in der zentralen Datenverarbeitungseinrichtung vorliegen, Herunterladen der neuen Kartendaten von der zentralen Datenverarbeitungseinrichtung in einen zweiten Speicherbereich des Fahrzeuggeräts, und
- wenn das Gültigkeitsdatum der neuen Kartendaten erreicht ist, Installieren der neuen Kartendaten in dem Fahrzeuggerät und anschließendes Verwenden der neuen Kartendaten in dem Fahrzeuggerät.

2. Verfahren nach Anspruch 1, wobei das Installieren der neuen Kartendaten ein Löschen der aktuellen Kartendaten in dem ersten Speicherbereich und ein Kopieren der neuen Kartendaten von dem zweiten Speicherbereich in den ersten Speicherbereich umfasst.

3. Verfahren nach Anspruch 1 oder 2, wobei eine Uhr des Fahrzeuggeräts ein aktuelles Datum bereitstellt, wobei das Gültigkeitsdatum der neuen Kartendaten mit dem aktuellen Datum verglichen wird, um ein Erreichen des Gültigkeitsdatums festzustellen.

4. Verfahren nach einem der vorangehenden Ansprüche, wobei
- nach einer Inbetriebnahme des Fahrzeuggeräts geprüft wird, ob neue Kartendaten im zweiten Speicherbereich des Fahrzeuggeräts vorliegen,
- falls die Prüfung positiv ausfällt, das Gültigkeitsdatum der neuen Kartendaten mit dem aktuellen Datum verglichen wird und
- die neuen Kartendaten in dem Fahrzeuggerät installiert und anschließend verwendet werden, wenn das Gültigkeitsdatum erreicht wurde.

5. Verfahren nach einem der vorangehenden Ansprüche, wobei die aktuellen Kartendaten eine erste Versionsnummer aufweisen, wobei die neuen Kartendaten eine zweite Versionsnummer aufweisen und wobei die erste Versionsnummer kleiner ist als die zweite Versionsnummer.

6. Verfahren nach einem der vorangehenden Ansprüche, wobei die Kartendaten Informationen zu mautpflichtigen Abschnitten umfassen.

7. Verfahren nach einem der vorangehenden Ansprüche, wobei die Kartendaten in mehrere Segmente unterteilt sind, wobei jedes Segment einem räumlichen Teilgebiet eines Mautgebiets entspricht und wobei jedes Segment Segmentdaten des Mautgebiets für das entsprechende Segment umfasst, und wobei
- während des Betriebs des Fahrzeuggeräts Bewegungsdaten bestimmt werden,
- wenn die Bewegungsdaten anzeigen, dass ein Übergang von einem ersten Segment in ein zweites Segment zu erwarten ist, Prüfen, ob für das zweite Segment gültige Segmentdaten in dem ersten Speicherbereich vorliegen, und
- wenn für das zweite Segment keine gültigen Segmentdaten in dem ersten Speicherbereich vorliegen, Bereitstellen von gültigen Segmentdaten für das zweite Segment in dem ersten Speicherbereich.

8. Verfahren nach Anspruch 7, wobei das Bereitstellen der gültigen Segmentdaten ein Kopieren der Segmentdaten von dem zweiten Speicherbereich des Fahrzeuggeräts in den ersten Speicherbereich des Fahrzeuggeräts umfasst.

9. Verfahren nach Anspruch 7, wobei das Bereitstellen der gültigen Segmentdaten ein Herunterladen der Segmentdaten von der zentralen Datenverarbeitungseinrichtung in den zweiten Speicherbereich des Fahrzeuggeräts und anschließendes Installieren der Segmentdaten im ersten Speicherbereich des Fahrzeuggeräts umfasst.

10. Verfahren nach einem der Ansprüche 7 bis 9, wobei das Prüfen der Gültigkeit der Segmentdaten für das zweite Segment eine Abfrage einer Versionsinformation zu den Segmentdaten umfasst und wobei nach Erhalt der Versionsinformation geprüft wird, ob gültige Segmentdaten für das zweite Segment vorhanden sind.

11. Verfahren nach einem der Ansprüche 7 bis 10, wobei die Segmente direkt aneinandergrenzen, derart, dass die Segmente das Mautgebiet lückenlos und überlappungsfrei abdecken.

12. Verfahren nach einem der Ansprüche 7 bis 11, wobei die Segmente eine viereckige Form aufweisen.

13. Verfahren nach einem der Ansprüche 7 bis 12, wobei jedes Segment eine das jeweilige Segment kennzeichnende Segmentidentifikationsnummer aufweist.

14. Verfahren nach einem der vorangehenden Ansprüche, wobei die Bewegungsdaten eine Position, eine Geschwindigkeit und/oder eine Bewegungsrichtung des Fahrzeugs umfassen.

15. System zum Aktualisieren von Kartendaten eines Mautsystems, aufweisend ein Fahrzeuggerät in einem Fahrzeug und eine zentrale Datenverarbeitungseinrichtung, wobei aktuelle Kartendaten in einem ersten Speicherbereich des Fahrzeuggeräts bereitgestellt sind, und wobei das Fahrzeuggerät eingerichtet ist,
- eine Anfrage an die zentrale Datenverarbeitungseinrichtung zu senden, ob neue Kartendaten verfügbar sind, wobei die neuen Kartendaten ein Gültigkeitsdatum aufweisen, wobei das Gültigkeitsdatum der neuen Kartendaten einen Zeitpunkt angibt, ab welchem die neuen Kartendaten gültig sind,
- falls neue Kartendaten in der zentralen Datenverarbeitungseinrichtung vorliegen, die neuen Kartendaten von der zentralen Datenverarbeitungseinrichtung in einen zweiten Speicherbereich herunterzuladen, und
- wenn das Gültigkeitsdatum erreicht ist, die neuen Kartendaten zu installieren und anschließend zu verwenden.
